# EUROPEAN PATENT SPECIFICATION

(11) **EP 2 505 290 B1**
(45) Date of publication and mention of the grant of the patent: **12.11.2014**
(21) Application number: 12159342.0
(22) Date of filing: 13.03.2012
(51) Int. Cl.: B23D 57/00, H02K 15/00

(54) **Device and method for cutting the end winding of an electric machine**
Vorrichtung und Verfahren zum Schneiden des Wickelkopfes einer elektrischen Maschine
Dispositif et procédé pour découper l'enroulement d'extrémité d'une machine électrique

(30) Priority: 28.03.2011 EP 11159953
(43) Date of publication of application: 03.10.2012
(73) Proprietor: Alstom Technology Ltd, 5400 Baden (CH)
(72) Inventor: Visintin, Massimiliano, 8002 Zürich (CH); Bialik, Janusz, 5415 Nussbaumen (CH); Koch, Edgar, 5502 Hunzenschwil (CH)

(56) References cited:
- US-A- 5 305 671
- US-A1- 2010 186 564

## Description

### TECHNICAL FIELD

The present invention relates to a device and a method for cutting the end winding of an electric machine such as an electric generator.

### BACKGROUND

Electric machines have a stator with a rotor. The stator usually has a laminated stator core with slots that house stator bars. The stator core with the stator bars may then be dipped into a resin bath to impregnate all components and realise a stiff and compact structure (global vacuum-pressure impregnation), however also different manufacturing processes are possible.

In some cases a rewind (i.e. a replacement of the old winding with new winding) is needed in order to extend the lifetime of the electric machine.

In case of rewind, the stator core can be reused, thus the winding must be removed from the stator core and a new winding must be installed in the same stator core.

In this respect, the first operation to be carried out is cutting and removal of the end winding.

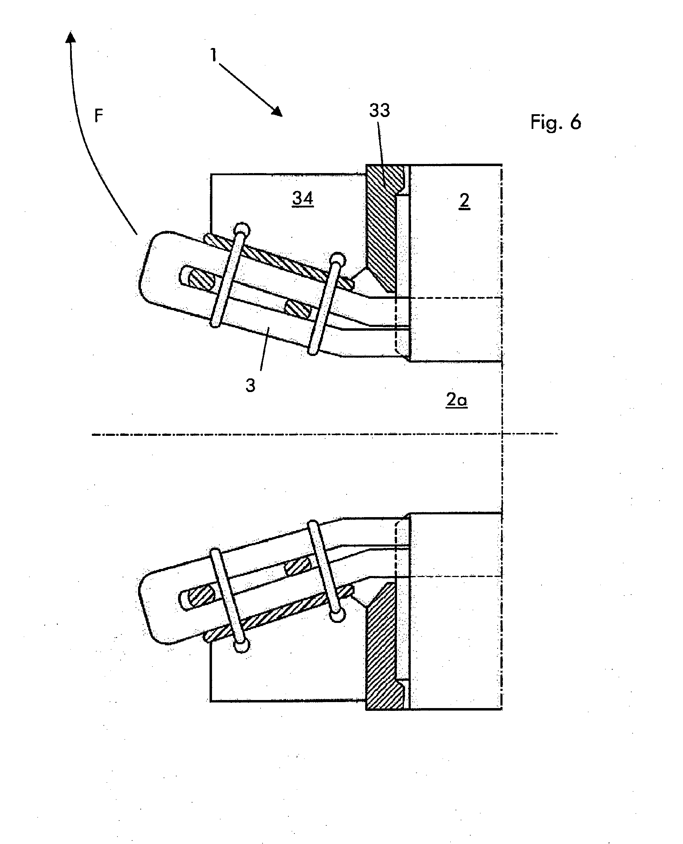

With reference to figure 6, a stator 1 having a stator core 2 (with a stator core bore 2a) with a winding comprising a end winding 3 is shown; the end winding defines a block of all of the terminal portions of the stator bars connected together.

In order to remove it, the end winding 3 is currently cut with a portable electric saw, to separate it from the stator core 2; then the end winding is removed (arrow F), possibly as a block.

US 5 305 671 discloses a device for cutting the end winding of an electrical machine with a rigid coil cutter.

The traditional way of cutting the end winding has some problems.

Cutting the end winding with a portable electric saw is very time consuming and thus it sensibly contributes to a long duration of the rewind.

Since such a rewind is performed many times on the critical path of an outage, the rewind duration must be reduced.

In addition, currently cutting the end winding is difficult and troubling to perform, because of the limited space available for the operator and for safety reasons.

In order to speed up the cutting and because of the worker conditions within the stator core, the operator typically does not select parts that could be reused (i.e. not cut) (for example stiffening plate extending from the press plate).

### SUMMARY

An aspect of the present invention therefore includes providing a device and method by which cutting of the end winding is quicker when compared to traditional cutting operations with a portable electric saw.

Another aspect of the invention is to provide a device and method by which the working conditions for the operators are improved.

A further aspect of the invention includes providing a device and a method which enable a selection of the end winding components to be actually cut and replaced.

The technical aim, together with these and further aspects, are attained according to the invention by providing a device and method in accordance with the accompanying claims.

### BRIEF DESCRIPTION OF THE DRAWINGS

Further characteristics and advantages of the invention will be more apparent from the description of a preferred but non-exclusive embodiment of the device and method illustrated by way of non-limiting example in the accompanying drawings, in which:

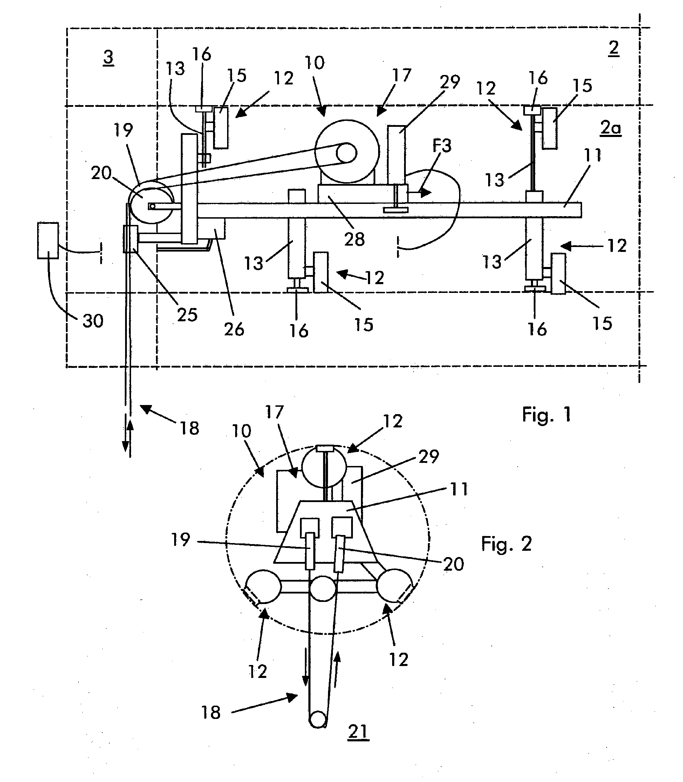

Figures 1 and 2 are respectively a schematic side view and a front view of a device in an embodiment of the invention;

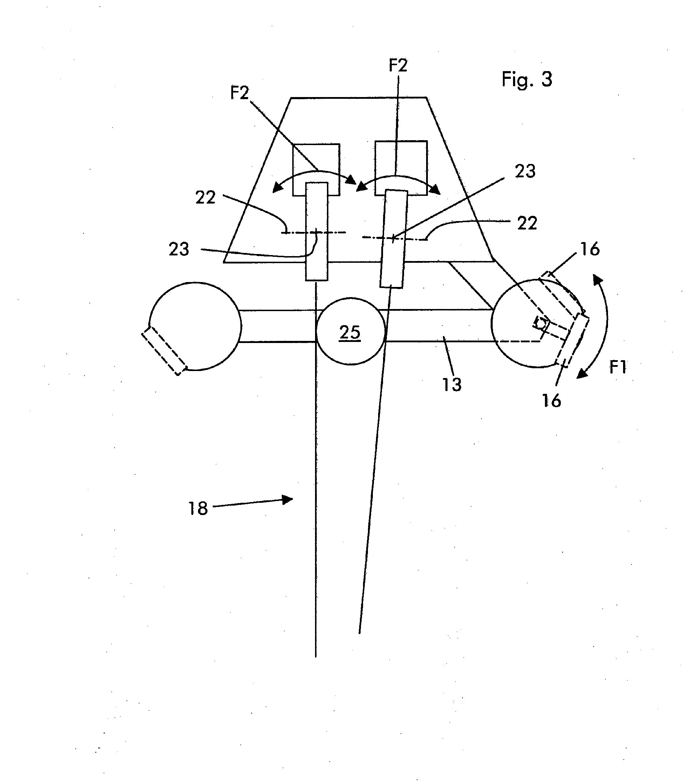

Figure 3 is an enlarged portion of figure 2;
Figure 4 shows a device within a stator core;
Figure 5 shows a front view of an end winding of an electric machine such as an electric generator; and
Figure 6 shows a side view of an end winding.

### DETAILED DESCRIPTION OF EMBODIMENTS OF THE INVENTION

With reference to the figures, wherein like references designate identical or corresponding parts throughout, a device 10 for cutting the end winding 3 of a stator core 2 of an electric machine is shown.

The device 10 comprises a frame 11 having supports 12 to block the device during operation.

The supports 12 are defined in the embodiment shown by arms 13 connected to the frame 11 (for example via bolds) and carrying wheels 15 to allow the rotation of the device 10 within a stator core 2 (i.e. to help its angular positioning), and feet 16 to block the device 10 within the stator core 2 during operation.

The feet 16 are hinged at the arms 13 and can rotate as indicated by arrows F1 between a rest position in which they cannot make contact with the stator core 2, and an operating position in which they can make contact with the stator core 2 to support the device 10.

The frame 11 also carries an activating group 17 for at least a cutting flexible element 18 and the cutting flexible element 18.

The cutting flexible element 18 can assume an open configuration and a closed configuration to define a closed circuit or ring; it is preferably a cable (for example metal or composite material cable) with trim elements (for example diamond portions); these cutting flexible elements 18 are commercially available.

In order to guide the cutting flexible element 18, the device further includes sheaves 19, 20 for guiding it to a cutting position 21.

In particular the device 10 has, projecting from the frame 11, a first sheave 19 for guiding the cutting flexible element 18 from the activating group 17 to the cutting position 21, and a second sheave 20 for guiding the cutting flexible element 18 from the cutting position 21 back to the activating group 17.

The first and the second sheaves 19, 20 are rotatable around a first axis 22, and also rotatable around a second axis 23 perpendicular to the first axis 22 as indicated by arrows F2. Rotation around the second axis 23 allows the position of the sheaves 19, 20 to be regulated according to the dimension or number of components to be cut. Naturally, according to the particular configuration of the device and needs, also only one of the sheaves 19, 20 can have the described features.

Advantageously a stop element 25 is also provided connected to the frame 11, to block the cutting flexible element 18 at the end of cutting; this stop element 25 is provided between the sheaves 19, 20 and the two branches of the cutting flexible element 18, i.e. the cutting flexible element 18 is provided astride the stop element 25.

Since during operation a lot of debris are generated, the device 10 is preferably also provided with a sucking group 26, to clean the debris generated during cutting.

The frame 11 also carries a cart 28 that, in turn, carries the activating group 17.

In addition, the device 10 also includes a driving group 29 for regulating the position of the cart 28 and activating group 17 during cutting according to the cut depth. In particular the driving group 29 includes a motor activated by an operator via a wire (preferred solution) or also wireless control unit 30. Alternatively the control unit 30 could also be an automated control unit in which the advancement of the cart 28 is automatically regulated.

Preferably the driving group 29 is aboard of the cart 28, in such a way as to fit the stringent space limitations around the generator for on-site cutting.

The operation of the device 10 is apparent from that described and illustrated and is substantially the following.

First the frame 11 is introduced within the stator core 2 (in particular within the stator core bore 2a) and it is fixed to it via the supports 12 and their feet 16.

Typically the device 10 is then assembled within the stator core 2.

Afterwards the flexible cutting element 18 is positioned astride the components to be cut (the cutting flexible element 18 is still open).

Thus the cutting flexible element 18 is closed to form a closed circuit or a ring and the activating group 17 is activated, such that the cutting flexible element 18 cuts the components selected for cutting.

During working the operator can control the cutting via the control unit 30 from outside the stator core 2; in particular the operator drives the cart 28 to move it away from the cutting position 21 as indicated by arrow F3. This lets the cutting flexible element 18 be drawn and thus the cut to advance accordingly.

At the end of a cutting the cutting flexible element 18 does not jump (because of the drawing from the cart 28 and activating group 17) with the risk of damaging the stator core 2, because it is withhold by the stop element 25.

Thus the cutting flexible element 18 is opened and typically removed, the feet 16 are rotated to the rest position and the device 10 is brought to a new position by rotating it with the help of the wheels 15. In this new position the feet 16 are rotated again to the operating position and the device is fixed to the stator core 2; thus the cutting flexible element 18 is provided again about the components to be cut and a second sector of the end winding 3 is cut.

These steps are repeated again until the end winding 3 is separated from the stator core 2. In this way the end winding can be cut over its whole circumference.

The cutting of different portions of the end winding 3 is feasible as well.

This device allows components to be cut to be selectively chosen and, in particular, it allows to save components that could be reused.

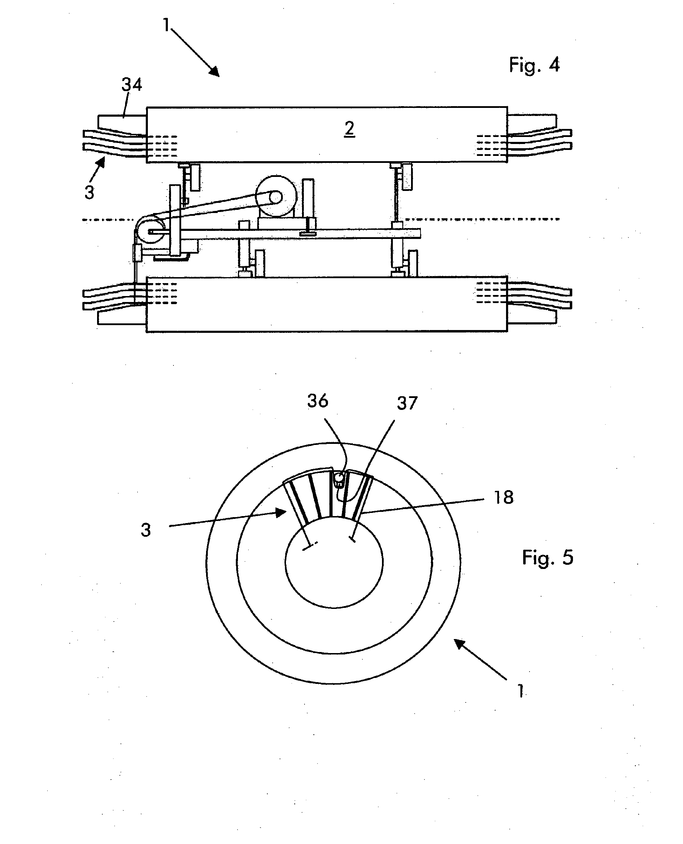

In this respect, figures 4 and 6 show a stator core 2 with end winding 3; in addition a press plate 33 of the stator core 2 and stiffening plates 34 extending therefrom are also shown. Stiffening plates 34 should be saved because their replacement may be very troubling; with the present device the cutting flexible element 18 can be located between the stiffening plate 34 and the end winding 3, such that during cutting only the end winding 3 is cut, but the stiffening plates 34 are not cut.

Figure 5 shows another example in which components can be saved from cutting.

The component could be located within the end winding 3, for example it could be a component projecting from the stator core 2 within the end winding 3; this component is identified by reference 36. When the cutting flexible element 18 is made of a cable with diamond trim elements (preferred solution), the trim elements can cut metal, but they can hardly cut wood or plastic. For this reason the component 36 can be protected with a wood or plastic protection 37 such that the trim elements do not cut it.

The present invention also refers to a method for cutting the end winding 2 of an electric machine.

The method comprises:
- providing the device 10, preferably within a stator core 2 of the electric machine such as an electric generator,
- encircling components to be cut with the cutting flexible element 18,
- cutting these components.

According to the method, the activating group position is regulated during cutting according to the cut depth.

Naturally the features described may be independently provided from one another.

In practice the materials used and the dimensions can be chosen at will according to requirements and to the state of the art.

### REFERENCE NUMBERS

- 1: stator
- 2: stator core
- 2a: stator core bore
- 3: end winding
- 10: device
- 11: frame
- 12: supports
- 13: arm
- 15: wheels
- 16: feet
- 17: activating group
- 18: cutting flexible element
- 19, 20: sheaves
- 21: cutting position
- 22: first axis
- 23: second axis
- 25: stop element
- 26: sucking group
- 28: cart
- 29: driving group
- 30: control unit
- 33: press plate
- 34: stiffening plates
- 36: component
- 37: protection
- F, F1, F2, F3: arrows

## Claims

1. Device (10) for cutting the end winding (3) of an electric machine comprising:
- a frame (11),
- supports (12) to block the device (10) during operation, and
- an activating group (17) for at least a cutting element (18),
**characterized in that**
- the at least one cutting element (18) is flexible and encircles components to be cut.

2. Device (10) according to claim 1, **characterised in that** the cutting flexible element (18) defines a closed circuit.

3. Device (10) according to claim 2, **characterised in that** the cutting flexible element (18) is a cable with trim elements.

4. Device (10) according to claim 1, **characterised by** further comprising sheaves (19, 20) for guiding the cutting flexible element (18) at a cutting positions (21).

5. Device (10) according to claim 4, **characterised in that**:
- at least a first sheave (19) for guiding the cutting flexible element (18) from the activating group (17) to the cutting position (21) is provided, and
- at least a second sheave (20) for guiding the cutting flexible element (28) from the cutting position (21) to the activating group (17) is provided,
wherein at least the first and/or the second sheaves (19, 20) are:
- rotatable around a first axis (22), and
- rotatable around a second axis (23) perpendicular to the first axis (22).

6. Device (10) according to claim 4, **characterised by** comprising a stop element (25), the cutting flexible element (18) being provided astride the stop element (25).

7. Device (10) according to claim 1, **characterised by** comprising a sucking group (26), to clean the debris generated during cutting.

8. Device (10) according to claim 1, **characterised in that** the frame (11) carries a cart (28) that, in turn, carries at least the activating group (17).

9. Device (10) according to claim 8, **characterised by** comprising a driving group (29) for regulating the position of the cart (28) and activating group (17) during cutting according to the cut depth.

10. Device (10) according to claim 9, **characterised in that** the driving group (29) is aboard of the cart (28).

11. Device (10) according to claim 1, **characterised in that** the supports (12) comprise arms (13) connected to the frame (11) carrying wheels (15) to help positioning of the device (10) and feet (16) to block the device (10) during operation.

12. Device according to claim 11, **characterised in that** the feet (16) are hinged at the arms (13) and can rotate between a rest position and an operating position to support the device (10).

13. Method for cutting the end winding (3) of an electric machine, comprising:
- providing, within a stator core (2) of an electric machine, a device (10) with:
o a frame (11),
o supports (12) to block the device (10) during operation,
o an activating group (17) for at least a cutting flexible element (18),
o at least one cutting flexible element (18),
- encircling components to be cut with the cutting flexible element (18),
- cutting the components.

14. Method according to claim 13, **characterised by** regulating the activating group position during cutting according to the cut depth.

## Patentansprüche

1. Einrichtung (10) zum Schneiden des Wickelkopfs (3) einer elektrischen Maschine, umfassend:
- einen Rahmen (11),
- Stützen (12) zum Blockieren der Einrichtung (10) während des Betriebs und
- eine Aktivierungsgruppe (17) für mindestens ein Schneidelement (18),
**dadurch gekennzeichnet, dass**
- das mindestens eine Schneidelement (18) flexibel ist und zu schneidende Komponenten umgibt.

2. Einrichtung (10) nach Anspruch 1, **dadurch gekennzeichnet, dass** das flexible Schneidelement (18) einen geschlossenen Kreis definiert.

3. Einrichtung (10) nach Anspruch 2, **dadurch gekennzeichnet, dass** das flexible Schneidelement (18) ein Kabel mit Trimmelementen ist.

4. Einrichtung (10) nach Anspruch 1, **dadurch gekennzeichnet, dass** es weiterhin Seilscheiben (19, 20) zum Führen des flexiblen Schneidelements (18) an einer Schneidposition (21) umfasst.

5. Einrichtung (10) nach Anspruch 4, **dadurch gekennzeichnet, dass**:
- mindestens eine erste Seilscheibe (19) zum Führen des flexiblen Schneidelements (18) von der Aktivierungsgruppe (17) zur Schneidposition (21) vorgesehen ist und
- mindestens eine zweite Seilscheibe (20) zum Führen des flexiblen Schneidelements (18) von der Schneidposition (21) zur Aktivierungsgruppe (17) vorgesehen ist,
wobei mindestens die ersten und/oder die zweiten Seilscheiben (19, 20) Folgendes sind:
- drehbar um eine erste Achse (22) und
- drehbar um eine zweite Achse (23) senkrecht zur ersten Achse (22).

6. Einrichtung (10) nach Anspruch 4, **dadurch gekennzeichnet, dass** sie ein Anschlagselement (25) umfasst, wobei das flexible Schneidelement (18) rittlings auf dem Anschlagselement (25) vorgesehen ist.

7. Einrichtung (10) nach Anspruch 1, **dadurch gekennzeichnet, dass** sie eine Sauggruppe (26) zum Entsorgen des während des Schneidens erzeugten Abfalls umfasst.

8. Einrichtung (10) nach Anspruch 1, **dadurch gekennzeichnet, dass** der Rahmen (11) einen Wagen (28) trägt, der wiederum mindestens die Aktivierungsgruppe (17) trägt.

9. Einrichtung (10) nach Anspruch 8, **dadurch gekennzeichnet, dass** sie eine Antriebsgruppe (29) zum Regeln der Position des Wagens (28) und der Aktivierungsgruppe (17) während des Schneidens gemäß der Schnitttiefe umfasst.

10. Einrichtung (10) nach Anspruch 9, **dadurch gekennzeichnet, dass** sich die Antriebsgruppe (29) an Bord des Wagens (28) befindet.

11. Einrichtung (10) nach Anspruch 1, **dadurch gekennzeichnet, dass** die Stützen (12) mit dem Rahmen (11) verbundene Arme (13) umfassen, die Räder (15) tragen, um das Positionieren der Einrichtung (10) und von Füßen (16) zu unterstützen, um die Einrichtung (10) während des Betriebs zu blockieren.

12. Einrichtung nach Anspruch 11, **dadurch gekennzeichnet, dass** die Füße (16) an den Armen (13) angelenkt sind und sich zwischen einer Ruheposition und einer Betriebsposition zum Unterstützen der Einrichtung (10) drehen können.

13. Verfahren zum Schneiden des Wickelkopfs (3) einer elektrischen Maschine, umfassend:
- Bereitstellen, innerhalb eines Statorkerns (2) einer elektrischen Maschine, einer Einrichtung (10) mit:
o einem Rahmen (11),
o Stützen (12) zum Blockieren der Einrichtung (10) während des Betriebs,
o einer Aktivierungsgruppe (17) für mindestens ein flexibles Schneidelement (18),
o mindestens einem flexiblen Schneidelement (18),
- Einschließen von zu schneidenden Komponenten mit dem flexiblen Schneidelement (18),
- Schneiden der Komponenten.

14. Verfahren nach Anspruch 13, **gekennzeichnet durch** das Regeln der Aktivierungsgruppenposition während des Schneidens gemäß der Schnitttiefe.

## Revendications

1. Dispositif (10) pour découper l'enroulement d'extrémité (3) d'une machine électrique, comprenant :
- un cadre (11),
- des supports (12) pour bloquer le dispositif (10) pendant le fonctionnement, et
- un groupe d'activation (17) pour au moins un élément de découpe (18),
**caractérisé en ce que**
- l'au moins un élément de découpe (18) est flexible et cerne les composants à découper.

2. Dispositif (10) selon la revendication 1, **caractérisé en ce que** l'élément de découpe flexible (18) définit un circuit fermé.

3. Dispositif (10) selon la revendication 2, **caractérisé en ce que** l'élément de découpe flexible (18) est un câble pourvu d'éléments de rognage.

4. Dispositif (10) selon la revendication 1, **caractérisé en ce qu'**il comprend en outre des réas (19, 20) pour guider l'élément de découpe flexible (18) à une position de découpe (21).

5. Dispositif (10) selon la revendication 4, **caractérisé en ce que** :
- au moins un premier réa (19) pour guider l'élément de découpe flexible (18) à partir du groupe d'activation (17) jusqu'à la position de découpe (21) est prévu, et
- au moins un deuxième réa (20) pour guider l'élément de découpe flexible (18) à partir de la position de découpe (21) jusqu'au groupe d'activation (17) est prévu,
- au moins le premier et/ou le deuxième réa (19, 20) étant :
- rotatif(s) autour d'un premier axe (22), et
- rotatif(s) autour d'un deuxième axe (23) perpendiculaire au premier axe (22).

6. Dispositif (10) selon la revendication 4, **caractérisé en ce qu'**il comprend un élément de butée (25), l'élément de découpe flexible (18) étant situé à califourchon sur l'élément de butée (25).

7. Dispositif (10) selon la revendication 1, **caractérisé en ce qu'**il comprend un groupe d'aspiration (26), pour nettoyer les débris générés pendant la découpe.

8. Dispositif (10) selon la revendication 1, **caractérisé en ce que** le cadre (11) porte un chariot (28) qui, pour sa part, porte au moins le groupe d'activation (17).

9. Dispositif (10) selon la revendication 8, **caractérisé en ce qu'**il comprend un groupe d'entraînement (29) pour réguler la position du chariot (28) et du groupe d'activation (17) pendant la découpe en fonction de la profondeur de découpe.

10. Dispositif (10) selon la revendication 9, **caractérisé en ce que** le groupe d'entraînement (29) est à bord du chariot (28).

11. Dispositif (10) selon la revendication 1, **caractérisé en ce que** les supports (12) comprennent des bras (13) reliés au chariot (11) portant des roues (15) pour aider à positionner le dispositif (10) et des pieds (16) pour bloquer le dispositif (10) pendant le fonctionnement.

12. Dispositif selon la revendication 11, **caractérisé en ce que** les pieds (16) sont articulés au niveau des bras (13) et peuvent tourner entre une position de repos et une position de fonctionnement pour supporter le dispositif (10).

13. Procédé pour découper l'enroulement d'extrémité (3) d'une machine électrique, comprenant :
- la fourniture, à l'intérieur d'un noyau de stator (2) d'une machine électrique, d'un dispositif (10) comprenant :
• un cadre (11),
• des supports (12) pour bloquer le dispositif (10) pendant le fonctionnement,
• un groupe d'activation (17) pour au moins un élément de découpe flexible (18),
• au moins un élément de découpe flexible (18),
- le fait de cerner les composants à découper avec l'élément de découpe flexible (18),
- la découpe des composants.

14. Procédé selon la revendication 13, **caractérisé en ce qu'**il comprend la régulation de la position du groupe d'activation pendant la découpe en fonction de la profondeur de découpe.
